# EUROPÄISCHE PATENTSCHRIFT

(11) **EP 1 045 112 B1**
(45) Veröffentlichungstag und Bekanntmachung des Hinweises auf die Patenterteilung: **27.07.2005**
(21) Anmeldenummer: 00810303.8
(22) Anmeldetag: 06.04.2000
(51) Int. Cl.: E21B 10/44

(54) **Gesteinsbohrer**
Masonry drill
Broche à pierre

(30) Priorität: 15.04.1999 DE 19916975
(43) Veröffentlichungstag der Anmeldung: 18.10.2000
(73) Patentinhaber: HILTI Aktiengesellschaft, 9494 Schaan (LI)
(72) Erfinder: Batliner, Rainer, 9486 Schaanwald (LI); Moseley, Steven, 6800 Feldkirch (AT); Schweizer, Edwin, 9496 Balzers (LI); Hauptmann, Udo, 86899 Landsberg/Lech (DE)
(74) Vertreter: Wildi, Roland

(56) Entgegenhaltungen:
- EP-A- 0 607 958
- EP-A- 0 657 617
- DE-A- 4 306 981
- US-A- 5 836 410

## Beschreibung

Die Erfindung betrifft einen Gesteinsbohrer gemäss dem Oberbegriff des Patentanspruchs 1.

Zur Verbesserung der Schneideigenschaften und der Schneidleistung besitzen Gesteinsbohrer neben den sich üblicherweise über einen Durchmesser eines Bohrerschafts erstreckenden Hauptschneiden eine oder mehrere zusätzliche Nebenschneiden. Haupt- und Nebenschneiden sind an Schneidkörpern vorgesehen, die die Stirnfläche des Bohrerschafts überragen und aus einem Schneidmaterial, beispielsweise aus einem Hartmetall, bestehen. Die Nebenschneiden sind beispielsweise an stiftförmig ausgebildeten Schneidkörpern vorgesehen, die zusätzlich zu einer die Hauptschneiden aufweisenden Schneidplatte in die Stirnfläche oder in die Umfangsfläche des Bohrerschafts eingesetzt sind. In einer alternativen Ausführungsvariante sind die Nebenschneiden an länglich bzw. plättchenförmig ausgebildeten Schneidkörpern vorgesehen, die von der Stirnseite des Bohrerschafts abragen und seinen Umfang überragen. Die länglichen Schneidkörper besitzen etwa die Form eines Dachkantprismas. Bei einigen Gesteinsbohrern des Stands der Technik ist die Anordnung der Nebenschneiden derart gewählt, dass sie bei bestimmungsgemässer Rotation des Gesteinsbohrers um seine Achse der jeweiligen Hauptschneide vorauseilen. Dabei ist eine Hauptabfuhr für das im Betrieb anfallende Bohrmehl der jeweiligen Nebenschneide vorgelagert.

Beim Bohren von Bohrlöchern in armiertem Beton kann es mit den bekannten Gesteinsbohrern vorkommen, dass der Bohrer bei seitlichen Armierungstreffern verläuft oder verhakt. Ein Verlaufen des Bohrers kann zu einer von der gewünschten Geometrie abweichenden Bohrlochform führen. Ein Verhaken des Bohrers kann sich in überraschenden Übertragungen von Drehmomentspitzen auf den Anwender äussem und führt in der Regel zu einer Arbeitsunterbrechung.

Ein Gesteinbohrer mit den Merkmalen des Oberbegriffs des Anspruches 1 ist aus US 5 836 410 bekannt.

Aufgabe der voniegenden Erfindung ist es daher, diesen Nachteilen der Gesteinsbohrer des Stands der Technik abzuhelfen. Das Verhalten des Gesteinsbohrers bei seitlichen Armierungstreffern soll verbessert werden.

Die Lösung dieser Aufgaben besteht in einem Gesteinsbohrer, der die im kennzeichnenden Abschnitt des Patentanspruchs 1 angeführten Merkmale aufweist. Der durch die Erfindung geschaffene Gesteinsbohrer besitzt einen Bohrerschaft, dessen Stirnfläche von Hauptschneiden und wenigstens einer Nebenschneide überragt wird. Die Hauptschneiden erstrecken sich im wesentlichen über einen Durchmesser des Bohrerschafts. Die Nebenschneide verläuft im wesentlichen in radialer Richtung und ist an wenigstens einem, die Stirnfläche des Bohrerschafts überragenden, länglichen Schneidkörper angeordnet. Bei bestimmungsgemässer Rotation des Bohrers um seine Achse läuft die Nebenschneide gegenüber der zugehörigen Hauptschneide vor. Dabei ist sie wiederum einer Hauptabfuhrnut für Bohrmehl nachgelagert. Der längliche Schneidkörper weist eine von der Nebenschneide zur Stirnfläche des Bohrerschaftes hin abfallende Schneidfläche auf, die wenigstens in einem dem Umfang des Bohrerschaftes näheren Abschnitt eine Schrägungsfläche bildet, die zum Umfang hin abfallend gekippt ist und gegenüber dem radialen Verlauf der Nebenschneide entgegen der Drehrichtung geneigt verläuft.

Die Schrägungsfläche verhindert beim schlagenden Bohren in armiertem Beton, dass der Gesteinsbohrer bei seitlichen bzw. tangentialen Armierungstreffern verhakt. Die Schrägungsfläche bewirkt, dass der Gesteinsbohrer bei einem Armierungstreffer kurzfristig angehoben und am Armierungseisen vorbeigeschoben wird. Dadurch behält der Gesteinsbohrer auch bei Armierungstreffern seine Rotation bei. Harte Kanten- bzw. Eckkontakte der Hartmetallschneiden mit dem Armierungseisen , die zum Verhaken des Bohrers und durch die Überlastung des Materials im ungünstigsten Fall zu einem Bruch der Hartmetall-Schneidkörper führen können, werden vermieden.

Für die Funktion des Gesteinsbohrers erweist es sich von Vorteil, wenn die Schrägfläche gegenüber der Achse des Bohrerschaftes um einen Winkel α in Richtung des Umfangs des Bohrerschaftes gekippt ist, der etwa 100° bis etwa 150° beträgt. Ein besonders gutes Bohrverhalten ist erzielbar, wenn gleichzeitig die Schrägungsfläche gegenüber dem radialen Verlauf der Nebenschneide um einen Winkel β geneigt ist, der etwa 5° bis etwa 80° beträgt.

Die Schneidfläche der Nebenschneide kann zweigeteilt sein, wobei der dem Umfang des Bohrerschafts nähere Abschnitt die Schrägungsfläche bildet. Um die bei einem streifendem Armierungstreffer auftretenden Kräfte möglichst gut abführen zu können, erweist es sich von Vorteil, wenn die Schrägungsfläche ausgehend vom Umfang des Bohrerschaftes etwa 20% bis etwa 100% der radialen Erstreckung des länglichen Schneidkörpers einnimmt.

Eine weitere Verbesserung des Verhaltens des Gesteinsbohrers bei Armierungstreffern ist erzielbar, wenn die Stirnseite des Bohrerschafts einen im wesentlichen kegelflächenförmigen Verlauf aufweist, wobei die Neigung der Kegelfläche kleiner oder gleich der Verkippung bzw. der Neigung der Schrägungsfläche ist. Auf diese Weise ausgebildet, gleitet bei einem streifenden Armierungstreffer die Stirnfläche entlang des Armierungseisens und geht weitgehend hindernisfrei in die Schrägungsfläche des die Nebenschneide tragenden Schneidkörpers über.

Aus Gründen der symmetrischen Belastung des Gesteinsbohrers und zur weiteren Verbesserung der Bohrleistung ist es von Vorteil, wenn zwei Nebenschneiden tragende, plattenartige Scheidkörper vorgesehen sind. Dabei sind die plattenartigen Schneidkörper zu beiden Seiten einer die Hauptschneiden aufweisenden Hauptschneidplatte angeordnet und liegen einander vorzugsweise auf einem Durchmesser des Bohrerschaftes gegenüber.

Im folgenden wird die Erfindung unter Bezugnahme auf ein in den Figuren dargestelltes Auführungsbeispiel näher erläutert. Es zeigen in schematischer Darstellung:
- Fig. 1: eine perspektivische Ansicht eines mit Haupt- und Nebenschneiden bestückten Vorderabschnittes eines erfindungsgemässen Gesteinsbohrers;
- Fig. 2: eine Seitenansicht des Gesteinsbohrers aus Fig. 1; und
- Fig. 3: eine Draufsicht des Gesteinsbohrers aus Fig. 1.

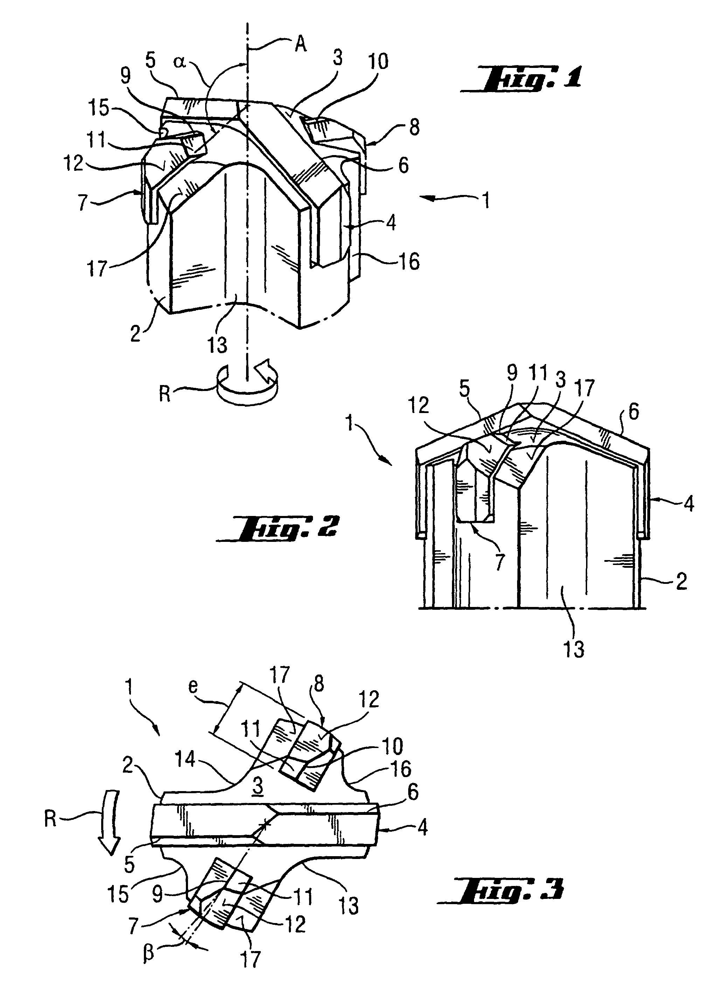

Der in Fig. 1 - 3 in verschiedenen Ansichten dargestellte Gesteinsbohrers ist jeweils gesamthaft mit dem Bezugszeichen 1 versehen. Der Gesteinsbohrer 1 weist einen Bohrerschaft 2 auf, dessen Stirnfläche 3 von Hauptschneiden 5, 6 und Nebenschneiden 9, 10 überragt wird. Die Hauptschneiden 5, 6 sind an einer Hauptschneidplatte 4 angeordnet, die sich über einen Durchmesser des Bohrerschaftes 2 erstreckt. Die Nebenschneiden 9 und 10 verlaufen im wesentlichen radial und sind an länglichen, plattenartigen Schneidkörpern 7 und 8 vorgesehen. Die Hauptschneidplatte 4 und die plattenartigen Schneidkörper 7, 8 sind in axiale Aufnahmeschlitze eingesetzt und zur Fixierung verlötet. Die Aufnahmeschlitze münden an der Stirnfläche 3 des Bohrerschafts 2 und an dessen Umfang. Die Hauptschneidplatte 4 und die plattenartigen Schneidkörper 7, 8 überragen auch den Bohrerschaft 2 in axialer und in radialer Richtung. Die Achse des Bohrerschafts 2 ist mit A bezeichnet.

Die Nebenschneiden 9, 10 an den plattenartigen Schneidkörper 7, 8 sind bezogen auf die mit R bezeichnete, bestimmungsgemässe Drehrichtung des Gesteinsbohrers 1 den jeweiligen Hauptschneiden 5 bzw. 6 vorgelagert. Bezogen auf die Drehrichtung R sind den Nebenschneiden 9, 10 Hauptabfuhrnuten 13 bzw. 14 nachgelagert. Zwischen den plattenartigen Schneidkörpern 7, 8 und der Hauptschneidplatte 4 können, wie es in Fig. 1 - 3 angedeutet ist, Zusatzabfuhrnuten 15, 16 für das während des Bohrens anfallende Bohrmehl angeordnet sein.

Die plattenartigen Schneidkörper 7, 8 besitzen Schneidflächen 11, die von der jeweiligen Nebenschneide 9, 10 zur Stirnfläche 3 des Bohrerschaftes 2 hin abfallen. Die bezogen auf die Drehrichtung nachlaufende Fläche, die sich von der jeweiligen Nebenschneide 9, 10 zur Stirnfläche 3 des Bohrerschaftes 2 erstreckt, bildet die Freifläche des plattenartigen Schneidkörpers 7, 8. Die Schneidfläche 11 des dargestellten Ausführungsbeispiels ist zweigeteilt und besitzt eine dem Umfang des Bohrerschaftes 2 näher liegenden Schrägungsfläche 12. Die Schrägungsfläche 12 ist zum Umfang des Bohrerschaftes 2 hin abfallend gekippt. Der Kippwinkel α gegenüber der Achse A des Bohrerschaftes 2 beträgt vorzugsweise etwa 110° bis etwa 150°. Gleichzeitig ist die Schrägungsfläche 12 auch gegenüber dem radialen Verlauf der Nebenschneide 9 entgegen der Drehrichtung R geneigt. Die Stirnfläche 3 des Bohrerschaftes 2 verläuft nicht plan. Vielmehr weist sie einen im wesentlichen kegelflächenförmigen Verlauf auf.

Die den Schrägungsflächen 12 vorgelagerten Bereiche der kegelförmigen Stirnfläche 3 können, wie in den Fig. angedeutet ist, mit Abflachungen 17 versehen sein. Der Neigungswinkel der Abflachungen 17 ist dabei vorzugsweise gleich oder kleiner als die Verkippung und die Neigung der Schrägungsfläche 12.

Die Erfindung wurde am Beispiel eines Bohrwerkzeugs erläutert, dessen Haupt- und Nebenschneiden an plattenförmigen Schneidelementen aus einem Schneidmaterial, vorzugsweise aus einem Hartmetall, ausgebildet sind, die in der Stirnfläche des Bohrerschaftes befestigt sind. Es versteht sich, dass die erfindungsgemässe Anordung einer Schrägungsfläche im Nebenschneidenbereich auch bei einem Vollkopfbohrer vorgesehen sein kann, der gesamthaft aus einem einzigen Hartmetallteil besteht. Die Erfindung ist auch nicht auf ein Ausführungsbeispiel eines Gesteinsbohrers mit zwei, einander auf einem Durchmesser gegenüberliegende Nebenschneiden beschränkt.

## Patentansprüche

1. Gesteinsbohrer mit einem Bohrerschaft (2) und mit Hauptschneiden (5, 6), die sich im wesentlichen über einen Durchmesser des Bohrerschaftes (2) erstrecken und die Stirnfläche (3) des Bohrerschaftes (2) überragen und mit wenigstens einer im wesentlichen in radialer Richtung verlaufenden Nebenschneide (9, 10), die an wenigstens einem die Stirnfläche (3) des Bohrerschaftes (2) überragenden, länglichen Schneidkörper (7, 8) angeordnet ist, wobei die Nebenschneide (9) bei bestimmungsgemässer Rotation R des Bohrers (1) um seine Achse A gegenüber der zugehörigen Hauptschneide (5) vorläuft und einer Hauptabfuhrnut (13) für Bohrmehl nachgelagert ist, **dadurch gekennzeichnet, dass** der längliche Schneidkörper (7) eine von der Nebenschneide (9) zur Stirnfläche (3) des Bohrerschaftes (2) hin abfallende Schneidfläche (11) aufweist, die wenigstens in einem dem Umfang des Bohrerschaftes (2) näheren Abschnitt eine Schrägungsfläche (12) bildet, die zum Umfang hin abfallend gekippt ist und gegenüber dem radialen Verlauf der Nebenschneide (9) entgegen der Drehrichtung R geneigt verläuft.

2. Gesteinsbohrer nach Anspruch 1, **dadurch gekennzeichnet, dass** die Schrägungsfläche (12) gegenüber der Achse A des Bohrerschaftes (2) um einen Winkel α in Richtung des Umfangs des Bohrerschaftes (2) gekippt ist, der etwa 100° bis etwa 150° beträgt.

3. Gesteinsbohrer nach Anspruch 2, **dadurch gekennzeichnet, dass** die Schrägungsfläche (12) gegenüber dem radialen Verlauf der Nebenschneide (9) um einen Winkel β geneigt verläuft, der etwa 5° bis etwa 80° beträgt.

4. Gesteinsbohrer nach einem der vorangehenden Ansprüche, **dadurch gekennzeichnet, dass** die Schrägungsfläche (12) ausgehend vom Umfang des Bohrerschaftes etwa 20% bis etwa 100% der radialen Erstreckung e des länglichen Schneidkörpers (7) einnimmt.

5. Gesteinsbohrer nach einem der vorangehenden Ansprüche, **dadurch gekennzeichnet, dass** die Stirnseite (3) des Bohrerschafts (2) einen im wesentlichen kegelflächenförmigen Verlauf mit Abflachungen 17 aufweist, wobei die Neigung der Abflachungen 17 kleiner oder gleich der Verkippung α bzw. der Neigung β der Schrägungsfläche (12) ist.

6. Gesteinsbohrer nach einem der vorangehenden Ansprüche, **dadurch gekennzeichnet, dass** zwei Nebenschneiden (9, 10) tragende, plattenartige Scheidkörper (7, 8) vorgesehen sind, die zu beiden Seiten einer die Hauptschneiden (5, 6) tragenden Hauptschneidplatte (4) angeordnet sind und einander vorzugsweise auf einem Durchmesser des Bohrerschaftes (2) gegenüberliegen.

## Claims

1. Masonry drill with a shank (2) and with main bits (5, 6), which extend essentially over a diameter of the shank (2) and project from the front face (3) of the shank (2), and with at least one secondary bit (9, 10) which runs essentially in a radial direction and is arranged on at least one oblong cutting body (7, 8) projecting from the front face (3) of the shank (2), wherein the secondary bit (9), when the drill (1) rotates according to the regulations about its axis A, runs in front of the associated main bit (5) and is mounted behind a main discharge groove (13) for drillings, **characterised in that** the oblong cutting body (7) exhibits a cutting face (11) that descends from the secondary bit (9) to the front face (3) of the shank (2), which face forms a face of inclination in at least one section closer to the periphery of the shank (2), which face is tilted downward toward the periphery and runs at an inclination relative to the radial course of the secondary bit (9) against the direction of rotation R.

2. Masonry drill according to Claim 1, **characterised in that** the face of inclination (12) is tilted relative to the axis A of the shank (2) by an angle α in the direction of the periphery of the shank (2), which angle is approximately 100° to approximately 150°.

3. Masonry drill according to Claim 2, **characterised in that** the face of inclination (12) runs at an inclination relative to the radial course of the secondary bit (9) by an angle β, which is approximately 5° to approximately 80°.

4. Masonry drill according to one of the preceding claims, **characterised in that** the face of inclination (12) occupies approximately 20% to approximately 100% of the radial extension e of the oblong cutting body (7), departing from the periphery of the shank.

5. Masonry drill according to one of the preceding claims, **characterised in that** the front side (3) of the shank (2) exhibits a course essentially in the shape of a conical surface with flattened sections 17, wherein the inclination of the flattened sections 17 is smaller than or equal to the tilting α or the inclination β of the surface of inclination (12).

6. Masonry drill according to one of the preceding claims, **characterised in that** two secondary bits (9, 10) are provided with supporting, plate-type cutting bodies (7, 8) which are arranged on both sides of a main cutting plate (4) supporting the main bits (5, 6), and oppose each other, preferably on a diameter of the shank (2).

## Revendications

1. Foret pour roche avec une tige de foret (2) et avec des taillants principaux (5, 6) qui s'étendent sensiblement sur un diamètre de la tige de foret (2) et dépassent de la face frontale (3) de la tige de foret (2), et avec au moins un taillant secondaire (9, 10) qui s'étend sensiblement dans la direction radiale et qui est disposé sur au moins un corps de coupe allongé (7, 8) dépassant de la face frontale (3) de la tige de foret (2), le taillant secondaire (9), lors d'une rotation appropriée R du foret (1) autour de son axe A, précédant le taillant principal correspondant (5) et succédant à une gorge d'évacuation principale (13) pour de la poussière de forage, **caractérisé en ce que** le corps de coupe allongé (7) comporte une surface de coupe (11) qui descend du taillant secondaire (9) vers la face frontale (3) de la tige de foret (2) et qui forme, au moins dans une portion plus proche de la périphérie de la tige de foret (2), une surface en biseau (12) qui descend en dévers vers la périphérie et présente, par rapport au tracé radial du taillant secondaire (9), un tracé incliné à l'opposé du sens de rotation R.

2. Foret pour roche selon la revendication 1, **caractérisé en ce que**, par rapport à l'axe A de la tige de foret (2), la surface en biseau (12) se trouve en dévers, en direction de la périphérie de la tige de foret (2), selon un angle α qui est d'environ 100° à environ 150°.

3. Foret pour roche selon la revendication 2, **caractérisé en ce que**, par rapport au profil radial du taillant secondaire (9), la surface en biseau (12) présente un profil incliné selon un angle β qui est d'environ 5° à environ 80°.

4. Foret pour roche selon une des revendications précédentes, **caractérisé en ce que**, à partir de la périphérie de la tige de foret, la surface en biseau (12) occupe environ 20 % à environ 100 % de l'extension radiale e du corps de coupe allongé (7).

5. Foret pour roche selon une des revendications précédentes, **caractérisé en ce que** la face frontale (3) de la tige de foret (2) présente un profil sensiblement conoïde pourvu de parties aplaties (17), l'inclinaison des parties aplaties (17) étant inférieure ou égale au dévers α, respectivement à l'inclinaison β de la surface en biseau (12).

6. Foret pour roche selon une des revendications précédentes, **caractérisé en ce qu'**il est prévu des corps de coupe en forme de plaquettes (7, 8) qui portent deux taillants secondaires (9, 10), qui sont disposés de part et d'autre d'une plaquette de coupe principale (4) portant les taillants principaux (5, 6) et qui sont situés à l'opposés l'un de l'autre, de préférence sur un diamètre de la tige de foret (2).
